# EUROPEAN PATENT APPLICATION

(11) **EP 4 610 706 A1**
(43) Date of publication of application: **03.09.2025**
(21) Application number: 24315063.8
(22) Date of filing: 27.02.2024
(51) Int. Cl.: G02B 7/12, G02B 23/10, G02B 23/18

(54) **SPOTTING BINOCULARS SYSTEM**

(71) Applicant: Safran Vectronix AG, 9435 Heerbrugg (CH)
(72) Inventor: Kirschner, Holger René, 77550 MOISSY-CRAMAYEL (FR); Conrad, Philipp, 77550 MOISSY-CRAMAYEL (FR); Noack, Philipp, 77550 MOISSY-CRAMAYEL (FR)
(74) Representative: Cabinet Boettcher

(57) **Abstract**

A spotting binocular system comprising at least a first optical equipment that comprises at least
a first housing,
a first telescope mounted in the first housing
a second telescope mounted in the first housing
an optic element carrying at least one reticle, the optic element being mounted in the first housing,
the spotting binoculars system being arranged so that a second optical equipment comprising at least a couple of magnification extension device can be attached in service to the first optical equipment.

According to the invention, the reticle comprises at least a first scale (41) and a second scale (42), the first scale being dedicated to be used solely with the first optical equipment alone, and the second scale being dedicated to be used with the first optical equipment when the second optical equipment is attached in service to the first optical equipment.

## Description

The present invention relates to a spotting binoculars system.

### BACKGROUND OF THE INVENTION

Spotting Binoculars (also known by acronym "SB") use telescopic sights for observing objects (in this case they are called "direct view optic SB") or use cameras with telephoto lens combined with a viewfinder display (in this case they are called "camera/viewfinder SB").

Besides, Rangefinding Binoculars (also known by acronym "RB") are also known. RB are special SB which include an integrated Laser Range Finder (also known by acronym "LRF") for measuring the distance between the RB to a dedicated object. There are two categories of SB: direct view optic RB and camera/viewfinder SB.

Camera/viewfinder RB use power consuming high-resolution cameras combined with power consuming high-resolution viewfinder displays. The demand for such high electrical power renders camera/viewfinder RB big and heavy. Moreover, if the power supply is shut off (for example if batteries run out of energy), the camera/viewfinder RB is useless. Compared to that, the direct view optic RB uses only a lower resolution display, optically blended to the binoculars field of view, to provide the user with information on the RB measurements e.g. the distance measured by the LRF. The lower resolution display allows for very low power consumption. Moreover, if the power supply is shut off, the direct view optic RB can be used like standard binoculars - as only the LFR measurements will be unavailable.

The problem is, that direct view optic RB are limited by resolution when used over very long distances.

On the other hand, direct view optic RB are limited by field of view when spotting closer objects.

In order to resolve this tradeoff, telescope designs with variable magnification could be utilized: the ocular changing can be done by an ocular lens group with a moving part to allow for continuous variation of the magnification or by changing the ocular to one with a different power focal length.

However, this solution comes with some serious drawbacks. First, the objective lens has to provide resolution that is under a resolution limit, for the highest magnification. This leads to a larger and heavier objective lens compared to what would be necessary for a low magnification RB. Second, the exit pupil diameter gets smaller if magnification is raised by changing the ocular (the objective lens and the entrance pupil stays). That leads to problems (especially at low light object spotting) because vignetting can occur, which ruins the viewing quality.

These problems render a magnification setting via ocular change impossible.

An elegant alternative to having the magnification change within the telescope's objective lens, is fixing a second telescope, which could be called "Magnification Extension Device" or "MED", in front of the objective lens. The MED can be designed with an entrance pupil to provide a constant size exit pupil to overcome the vignetting problems described above with the ocular changing magnification setting.

However, this generates problems when a reticle with angle scale is used for angle measurements and the reticle is not adapted to the MED, which can be confusing for the user.

### OBJECT OF THE INVENTION

An aim of the invention is to propose a solution that at least partly obviates to the aforementioned drawback.

### SUMMARY OF THE INVENTION

In view of achieving at least partly this aim, a spotting binocular system is proposed, the system comprising at least a first optical equipment that comprises at least
a first housing,
a first telescope mounted in the first housing comprising at least
   an objective
   an ocular
a second telescope mounted in the first housing comprising
   an objective
   an ocular
an optic element carrying at least one reticle, the optic element being mounted in the first housing,
the spotting binoculars system being arranged so that a second optical equipment comprising at least a couple of magnification extension devices can be attached in service to the first optical equipment.

According to the invention, the reticle comprises at least a first scale and a second scale, the first scale being dedicated to be used solely with the first optical equipment alone, and the second scale being dedicated to be used with to the first optical equipment when the second optical equipment is attached in service to the first optical equipment.

Thus, the invention provides an optic element carrying a reticle comprising several scales, each scale being used for only one of the possible configurations of the invention.

In particular, the first scale is provided for the binoculars without the magnification extension devices and the second scale (on the same optic element) is provided for the binoculars with the magnification extension devices.

The invention makes it easy to combine magnification extension devices with adapted scales.

The invention is therefore simple in structure.

Moreover, a user does not have to act on the optic element to change the scale as the optic element comprises several scales from the beginning.

Optionally, at least one of the scales is an angle scale. Optionally, the second optical equipment is part of the spotting binoculars system.

Optionally, at least one magnification extension device comprises a second housing and a telescope mounted into said housing.

Optionally, the second housing and the first housing include means of securing each other.

Optionally, the system comprises also a third optical equipment comprising at least a couple of magnification extension devices, the third optical equipment could be attached to the first optical equipment if, in service, the second optical equipment is not attached to the first optical equipment.

Optionally, the optic element comprises at least one glass plate and/or at least one glass prism.

Optionally, the system is arranged to display onto at least one of the ocular optical paths of the first optical equipment an indication of the scale to be used depending if, in service, the second optical equipment is mounted or not onto the first optical equipment.

Optionally, the system is arranged to detect in service an incorrect assembly of the second optical equipment onto the first optical equipment and/or of a third optical equipment onto the first optical equipment in case the system comprises such third optical equipment..

Optionally, the system includes an integrated laser range finder.

Other features and advantages of the invention will emerge upon reading the following description of a particular, nonlimiting embodiment of the invention.

### BRIEF DESCRIPTION OF THE DRAWINGS

The invention will be best understood in the light of the following.description, in reference to the accompanying figures, among which:
[Fig. 1] Figure 1 is a perspective view of a spotting binocular system according to a first embodiment of the invention,
[Fig. 2] Figure 2 is a very schematic cross-sectional view of a first optical equipment of the system illustrated in figure 1,
[Fig. 3] Figure 3 is a very schematic cross-sectional view of the first optical equipment and the second optical equipment of the system illustrated in figure 1,
[Fig. 4] Figure 4 is a user view through the system illustrated in figure 1,
[Fig. 5] Figure 5 is a perspective view of a spotting binocular system according to a second embodiment of the invention,
[Fig. 6] Figure 6 represents the system illustrated in figure 5 and a corresponding user view when the first optical equipment of said system is used alone and when the second optical equipment of said system is attached to said first optical equipment,
[Fig. 7] Figure 7 represents a spotting binocular system according to a third embodiment of the invention and corresponding user views when a first optical equipment of said system is used alone, when a second optical equipment of said system is attached to said first optical equipment and when a third optical equipment of said system is attached to said first optical equipment,
[Fig. 8] Figure 8 is a perspective view of a spotting binocular system according to a fourth embodiment of the invention and a corresponding user view when the spotting binocular system is in a wrong configuration,
[Fig. 9] Figure 9 is a perspective view of a spotting binocular system according to a fifth embodiment of the invention and a corresponding user view when the spotting binocular system is in a wrong configuration.

### DETAILED DESCRIPTION OF THE INVENTION

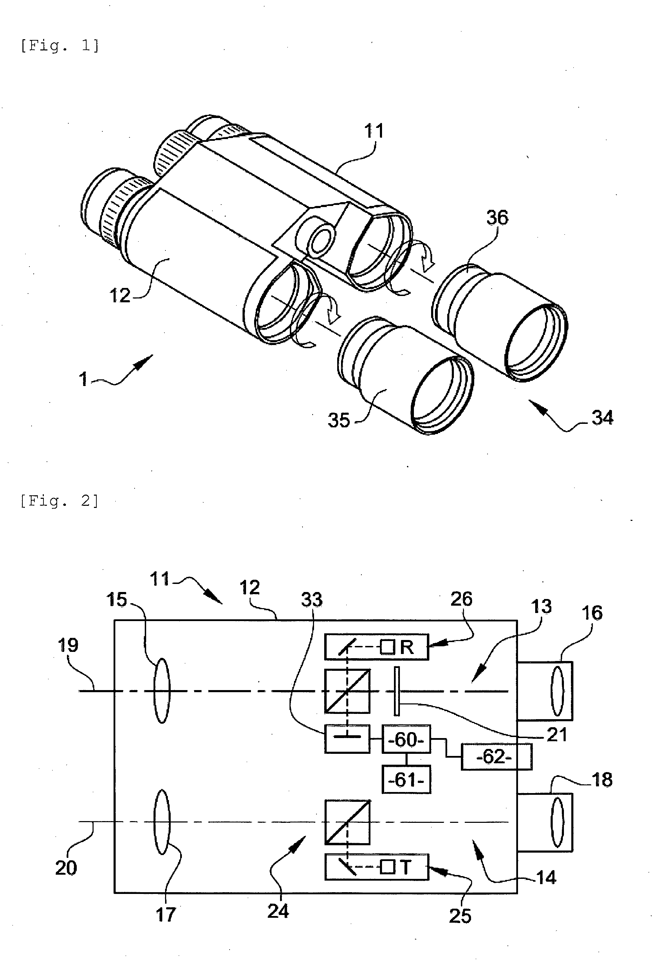

In figures 1 to 4, a spotting binocular system 1 is presented according to a first embodiment of the invention. This system 1 could be used e.g. for observation object spotting in many different applications including hunting and long-range shooting.

### The system 1 comprises a first optical equipment 11.

The first optical equipment 11 is a Spotting Binoculars or SB and in particular is a direct view optic SB. The first optical equipment 11 does not comprise camera and in particular does not comprise camera with telephoto lens. The first optical equipment 11 comprises a first housing 12. Fixed into the first housing 12 are two telescopes. Thus, first optical equipment 11 comprises a first telescope 13 mounted in the first housing 12 and a second telescope 14 mounted in the first housing 12.

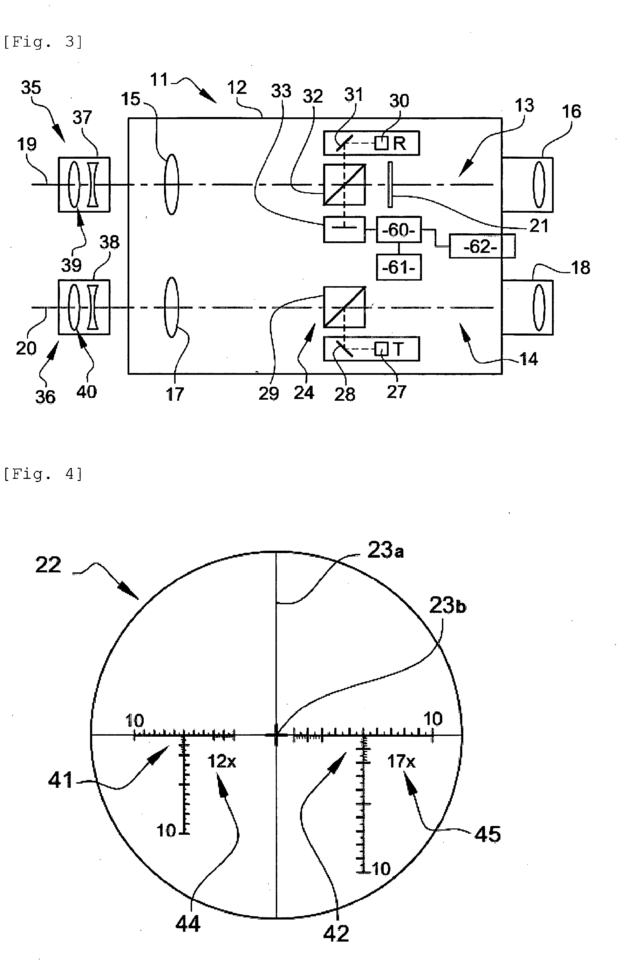

As well-known, the first telescope 13 comprises an objective 15 and an ocular 16 and the second telescope 14 also comprises an objective 17 and an ocular 18. Each couple objective/ocular 15/16 or 17/18 could then define optical paths 19, 20 - symbolized by dotted lines in figures 2 and 3 - whose entrance are each ocular 16, 18 and whose exit are each objective 15, 17 (when the first optical equipment 11 is used alone).

The objective 15 of the first telescope 13 and/or the objective 17 of the second telescope 14 comprises one lens or several lenses. First and second telescope 13, 14 are preferably arranged so that the magnification of the first and second telescope 13, 14 are the same. First and second telescope 13, 14 are preferably arranged to have the same structure.

Preferably, the system 1 is designed to assure an erect image. Thus, a user could perceive objects right-side up. For example, the system 1 could comprise at least one image-erecting system as for example an Abbe-Konig prism, a double Porro prism, an Uppendahl prism, a Schmidt-Pechan prism, etc.

### To simplify the present application, figures are presented without image-erecting system.

An optic element 21, carrying at least one reticle 22, is mounted in the first housing 12 so that at least one of the optical paths passes through it. For example, the optic element 21 is mounted so that the first optical path 19 passes through it. The optic element 21 could be integrated to an image-erecting system or reciprocally.

In this way, when a user observes a scene with the system 1, the user can perceive the reticle 22 superimposed on the scene.

For example, the reticle 22 is engraved or realized by embedded fibers or by a coating.

For example, the reticle 22 is engraved (like for example an engraved structure on a glass plate or glass prism) or realized by embedded fibers in a glass plate or glass prism or by a coating on a glass plate or glass prism.

The reticle 22 (as visible figure 4) comprises for example a pattern of at least one line and/or at least one marking, the pattern being built into the optic element 21 to provide one or several measurement references during visual inspections.

The reticle 22 comprises for example a crosshair pattern 23a. For example, the crosshair pattern 23a is a pair of perpendicularly intersecting lines in the shape of a cross. For example, the crosshair pattern 23a comprises a horizontal line and a vertical line intersecting in their respective middles.

For example, the reticle 22 comprises a middle pointer 23b, which could be conformed for example as an inner circle, a dot, a cross or other pattern defining a point.

The optic element 21 is or comprises for example a glass plate and/or a glass prism and/or a structure cemented from at least one glass plate(s) and/or at least one glass prism(s). For example, the optic element 21 is or comprises at least one laterally structured glass plate and/or comprises at least one laterally structured glass prism. For example, the optic element 21 is a glass plate and the reticle 22 is engraved onto said glass plate or is a laterally structured plane surface of said glass plate. In case the optic element 21 is integrated inside the image-erecting system (or reciprocally), the reticle 22 could be integrated into said image-erecting system. Preferably, the first optical equipment 11 comprises a laser range finder 24 (also called thereinafter LRF). The first optical equipment 11 is then a rangefinding binoculars or RB.

For example, the LRF 24 comprises a laser emitter group 25 and a laser receiver group 26, one of them being integrated to one of the two telescopes and other one integrated to the other telescope. For example, the laser emitter group 25 is integrated to the second telescope 14 and the laser receiver group 26 to the first telescope 13 (i.e. the one with the optic element 21).

Optionally, the laser emitter group 25 comprises a laser source 27, a mirror 28 and a beamsplitter cube 29. Accordingly, the laser receiver group 26 comprises a receptor 30, a mirror 31 and a beamsplitter cube 32.

In service, the laser source 27 generates laser pulses that are mirrored into the second optical path 20 via the mirror 28 and the beamsplitter cube 29.

After being reflected onto a specific object, the laser pulses are mirrored from the first optical path 19 onto the receptor 30 via the beamsplitter cube 32 and the mirror 31.

The first optical equipment 11 comprises a controller 61. This controller 61 permits for example to control one or several sensors of the first optical equipment 11 and/or of the system 1. For example, this controller 61 is configured to drive and read at least one sensor of the first optical equipment 11. The first optical equipment 11 comprises a processing system 60. This processing system 60 permits for example to control and read the controller 61.

For example, the controller 61 drives the LRF laser source 27 and the LRF receptor 30 and reads the LRF receptor 30. In this way the controller 61 determines the time for the laser pulses to travel from the source 27 to the receptor 30. This information is passed from the controller 61 to the processing system 60, which calculates the distance to the specific object.

Preferably, the first optical equipment 11 comprises also at least one electronic display 33 arranged into the housing 12. The beamsplitter cube 32 is also arranged to allow mirroring the electronic display 33 to the optical path 19. In this way, information shown on the electronic display 33 is also visible.by at least one eye of the user (ocular 16) when looking through the oculars 16, 18. The processing system 60 drives the electronic display 33 to show information like for example the specific object distance information.

In this way, when the user observes a scene with the system 1, the user can perceive the reticle 22 superimposed on the scene and also the distance estimated by the LFR 24. The first optical equipment 11 comprises an interface 62 in order for the system 1 to exchange with the user. For example, the interface 62 is connected to the processing system 60. The interface 62 allows the user to e.g. invoke the LRF measurement and/or choose units for distance information and/or allows in some other way to influence the state/function of the first optical equipment 11 and/or the system.

If a change in telescope magnification is wanted, the user mounts temporally a second optical equipment 34 to the first optical equipment 11. It will be understood that the second optical equipment 34 has a different magnification than the one of the first optical equipment 11.

The second optical equipment 34 comprises two magnification extension devices 35, 36. Said two magnification extension devices 35, 36 are afocal magnification extension devices. The two magnification extension devices 35, 36 are two independent parts.

The first magnification extension device 35 comprises a housing 37. Fixed into said housing 37 is a telescope 39. The second magnification extension device 36 comprises a housing 38. Fixed into said housing 38 is also a telescope 40.

Thus, second optical equipment 34 comprises a first telescope 39 mounted in the housing 37 and a second telescope 40 mounted in the housing 38. First and second telescope 39, 40 are preferably arranged so that the magnification of the first and second telescope 39, 40 are the same. First and second telescope 39, 40 are preferably arranged to have the same structure. The second optical equipment 34 does not comprise camera and in particular does not comprise camera with telephoto lens.

As well-known, the first telescope 39 comprises one lens or several lenses and the second telescope 40 also comprises one lens or several lenses. The first and second telescopes 39, 40 are for example configured as Galilean telescopes and so each of them comprises at least a convergent lens and a divergent lens.

Besides, the user mounts the first magnification extension device 35 onto the first housing 12 to that the first magnification extension device 35 is arranged to form an extension of the first optical path 19 and the user mounts the second magnification extension 36 device onto the first housing 12 to that the second magnification extension device 36 is arranged to form an extension of the second optical path 20.

With the magnification extension devices 35, 36, the entrance of each optical paths 19, 20 - symbolized by dotted lines in figures 2 and 3 - is the associated ocular 16, 18 and the exit of each optical paths 19, 20 is the associated magnification extension device 35, 36 (when the first optical equipment 11 is combined with the second optical equipment 34). This makes it easy to understand that the system 1 could operate in the same way with the first optical equipment 11 alone or with the first optical equipment 11 combined with the second optical equipment 34.

For example, the magnification extension devices 35, 36 are affixed on at least one side of the first housing 12, said side being opposite to the side bearing the oculars 16, 18. For example, the magnification extension devices 35, 36 are affixed on the first housing 12 at the level of the objectives. For example, the magnification extension devices 35, 36 are screwed to the first housing 12.

Note that the described thread fixture (screw-threaded mounts) is just an exemplary embodiment where alternative embodiments include bayonet mounts and breech-lock lens mounts and friction mounts.

Besides, the reticle 22 also comprises at least a first scale 41 (as visible figure 4 for example) and a second scale 42, the first scale 41 being dedicated to be used solely with the first optical equipment 11 alone, and the second scale 42 being dedicated to be used with the first optical equipment 11 with the second optical equipment 34 attached to the first optical equipment 11.

At least one of the scales 41, 42 could carry at least one horizontal and/or at least one vertical lines. At least one of the lines could comprise at least two regular marks (dash(es) and/or dot(s)).

In the present case, the first- scale 41 comprises a horizontal line and a vertical line extending from the middle of the horizontal line and heading _ exclusively toward the bottom. Each lines comprise regular marks. The first scale 41 is defined based on at least one optical characteristic of the first optical equipment 11 as for example its magnification.

The first scale 41 is an angular scale. The first scale 41 could then be used for angular difference measurements while observing a specific object. An example for an angle scale application is a shooter and spotter team performing a long-range shooting contest. The system 1 (without the second optical equipment 34) is used by the spotter to see the aimed specific object point and the bullet hit position after a first shot. Applying the first scale 41, the spotter measures the angular difference and reports to the shooter, who applies the correction to the next shot.

In the present case, the second scale 42 comprises a horizontal line and a vertical line extending from the middle of the horizontal line and heading exclusively toward the bottom. Each lines comprise regular marks. The second scale 42 is defined based on at least one optical characteristic of the second optical equipment 34 as for example its magnification.

The second scale 42 is an angular scale. The second scale 42 could then be used for angular difference measurements while observing a specific object. An example for an angle scale application is a shooter and spotter team performing a long-range shooting contest. The system 1 (with the second optical equipment 34 combined to the first optical equipment 11) is used by the spotter to see the aimed specific object point and the bullet hit position after a first shot. Applying the second scale 42, the spotter measures the angular difference and reports to the shooter, who applies the correction to the next shot.

As already stated, both scales 41, 42 are carried by the same optic element 21. Thus, both scales 41, 42 are arranged in different zones of the optic element 21 so that a user could perceive both scales 41, 42 at the same time without confusion.

As both scales 41, 42 are part of the reticle 22 they could be engraved or realized by embedded fibers or by a lateral structured coating as already disclosed.

For example, both scales 41, 42 are arranged in the lower part of the optic element 21. For example, both scales 41, 42 are arranged so that their horizontal line are superposed over the horizontal line of the crosshair pattern 23a. Horizontal lines of scales 41, 42 could be thicker than the horizontal line of the crosshair pattern 23a in order for the user to better identify the scales 41, 42.

For example, one scale is arranged at one side of the optic element 21 and the other scale is arranged at the other side of the optic element 21. For example, both scales 41, 42 are arranged so that their vertical lines extend one from the middle of the left part of the horizontal line of the crosshair pattern 23a and the other from the middle of the right part of the horizontal line of the crosshair pattern 23a. For example, the first scale 41 is arranged at the left side of the optic element 21 and the second scale 42 is arranged at the right side of the optic element 21.

Thus, when the user perceives a scene through the system 1, he could see the reticle 22 and in the lower part of the reticle 22, the first scale 41 at his left and the second scale 42 at' his right.

Preferably, the reticle 22 also comprises a caption 44 associated to at least one of the scales. Preferably, the reticle 22 is configurated so that each scale is associated with its own caption. For example, the caption 44 indicates the at least one optical characteristic that defined the associated scale. For example, the caption 44 indicates the magnification of the system 1 without the second optical equipment 34 and the second caption 45 indicates the magnification of the system 1 with the second optical equipment 34. Preferably, the captions 44, 45 are each located in the vicinity of the corresponding scale.

For example, each caption 44, 45 is arranged under the horizontal line of the associated scale 41, 42. For example, each caption 44, 45 is arranged at one side of the vertical line of the associated scale 41, 42 (for example the left side of the vertical line of the left scale 41 and the right side of the vertical line of the right scale 42 or inversely).

As visible in figure 4, with said system 1, when a user observes a scene with the system 1, the user can perceive the crosshair pattern 23a and the middle pointer 23bsuperimposed on the scene (and potentially the distance estimated by the LFR 24) and also both scales 41, 42. Owing to the caption 44, 45, the user is supported in correctly choosing the right scale for measurement as the user knows if the magnification extension devices 35, 36 are mounted or not on the first optical equipment 11.

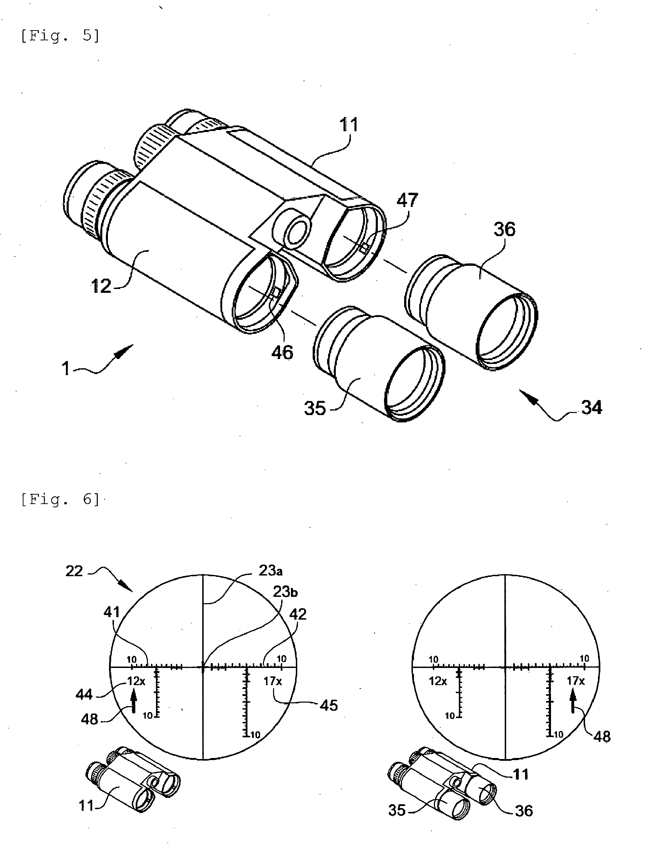

In figures 5 to 6, a spotting binocular system 1 is presented according to a second embodiment of the invention.

This system 1 is identical to the one of the first embodiment except that it includes means for detecting if the second optical equipment 34 is mounted onto the first optical equipment 11.

The means for detecting the presence and/or the absence of the second optical equipment 34 could comprise for example one or several sensors. Said means could comprise at least one presence sensor. The presence sensor could be selected for example from the following non-exclusive list: reflex light barrier, proximity switch, electrical conduction monitoring, capacitive and/or inductive distance sensor, reed relay or other magnetic field sensor, sensor based on ultrasonic emission and detection, sensor based on the transmitting and receiving radio waves, etc.

For example, the system 1 comprises a first sensor 46 to monitor if the first magnification extension device 35 is mounted or not and a second sensor 47 to monitor if the second magnification extension device 36 is mounted or not. For example, the first sensor 46 is located in the system 1 at the junction zone between the first optical equipment 11 and the first magnification extension device 35. For example, the first sensor 46 is located inside screw threads of the first optical equipment 11 dedicated to cooperate with corresponding screw threads of the first magnification extension device 35.

For example, the second sensor 47 is located in the system 1 at the junction zone between the first optical equipment 11 and the second magnification extension device 36. For example, the second sensor 47 is located inside screw threads of the first optical equipment 11 dedicated to cooperate with corresponding screw threads of the second magnification extension device 36.

Preferably, the system 1 also includes means for actively indicating (via at least one active indication) which scale to use, depending on if the second optical equipment 34 is mounted or not on the first optical equipment 11. By "actively", it should be understood that said means change the indication according if the second optical equipment 34 is mounted or not on the first optical equipment 11 i.e. the user will not see the same indication if the second optical equipment 34 is mounted or not on the first optical equipment 11. This term opposes to captions 44, 45 which are "passives" as said captions 44, 45 remain the same if the second optical equipment 34 is mounted or not on the first optical equipment 11.

Said means could comprise for example the controller 61 and/or the processing system 60 and/or the electronic display 33 and/or could comprise additional elements.

In service, said means estimate if the second optical equipment 34 is mounted or not onto the first optical equipment 11 (according to the signals generated by sensors 46, 47). More precisely, this information is read by the controller 61, which sends the presence information to the processing system 60. The processing system 60 drives the electronic display 33 to show at least one indication 48 to be displayed into at least one of the optical paths 19, 20 of the system 11.

In this way, said indication 48 shown on the electronic display 33 is also visible by at least one eye of the user (ocular 16) when looking through the oculars 16, 18.

In this exemplary embodiment, the electronic display 33 is used to display said at least one indication 48.

Other possible embodiments include indication 48 generated by one or several LED light points.which are arranged in the first optical equipment 11 and controlled by the processing system 60.

At least one of the LED light points can be at the optic element 21 position and/or augment the electronic display 33.

The indication 48 could be an arrow, a light point, a circle or any other symbol, figure, alphanumeric character, etc. that permits to highlight which scales 41, 42 to use. For example, the indication 48 could highlight the caption 44, 45 and/or the scale 41, 42. The indication 48 could highlight one or several elements directly or indirectly e.g. via for example scattered light or fluorescent light. For example, the indication 48 is an arrow that is directed to the caption 44, 45 of the scale 41, 42 to be used.

As visible in figure 6, with said system 1, when a user observes a scene with the system 1, the user perceives the crosshair pattern 23a and the middle pointer 23b superimposed on the scene (and potentially the distance estimated by the LRF 24) and also both scales 41, 42 and both captions 44, 45. The user also perceives the indication of the right scale to be used.

Without the magnification extension devices 35, 36, the sensors 46, 47 register the absence of the magnification extension devices 35, 36: in this case, the appropriate scale (here the first scale 41) is marked with an arrow generated by the electronic display 33. Note that there is no active indication for the second scale 42.

With the magnification extension devices 35, 36, the sensors 46, 47 register the presence of the magnification extension devices 35, 36: in this case the appropriate scale (here the second scale 42) is marked with an arrow generated by the electronic display 33. Note that there is no active indication for the first scale 41.

Marking the appropriate scale supports the user in correctly choosing the right scale for the measurement. It is noted that the electronic display 33 does not generate the scales 41, 42 (thus the electronic display 33 does not have to have the resolution and/or contrast and/or lateral size to generate such scales) . The scales 41, 42 are part of the reticle 22 and so are carried directly by the optic element 21 and only highlighted in turn by the electronic display 33.

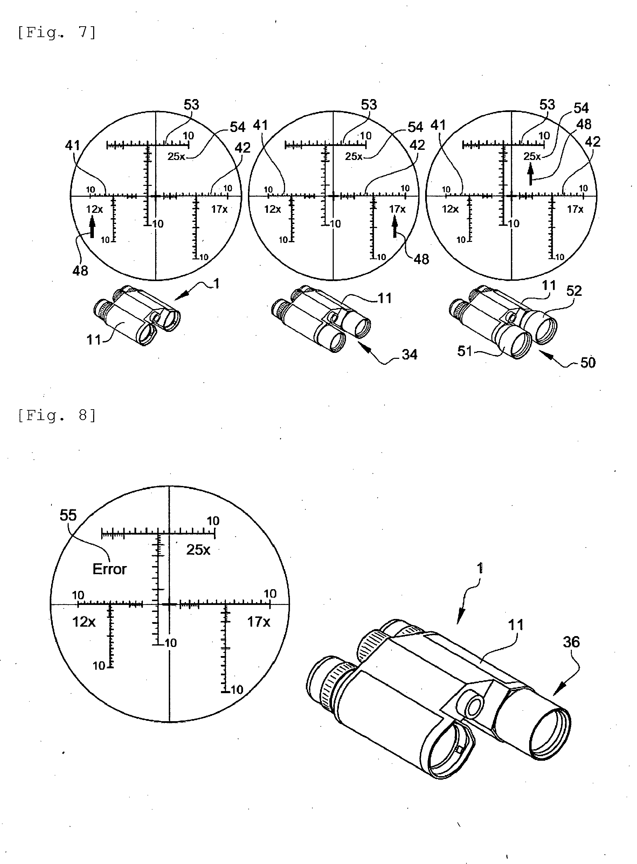

In figure 7, a spotting binocular system 1 is presented according to a third embodiment.of the invention.

This system 1 is identical to the one of the second embodiment except that it includes one additional optical equipment 50 that could be mounted onto the first optical equipment 11.

Namely, the system 1 comprises the second optical equipment 34 (as already described in regard of first and second embodiments) and also a third optical equipment 50, the second optical equipment 34 and the third optical equipment 50 having two different magnifications.

The third optical equipment 50 comprises two magnification extension devices 51, 52. The two magnification extension devices 51 52 are afocal magnification extension devices. The first magnification extension device 51 comprises a housing. Fixed into said housing is a telescope.

The second magnification extension device 52 comprises a housing. Fixed into said housing is also a telescope. Thus, third optical equipment 50 comprises a first telescope mounted in a housing and a second telescope mounted in a housing. First and second telescope are preferably arranged so that the magnification of the first and second telescope optical systems are the same. First and second telescope are preferably arranged to have the same structure. The third optical equipment 50 does not comprise camera and in particular does not comprise camera with telephoto lens.

As well-known, the first telescope comprises one lens or several lenses and the second telescope also comprises one lens or several lenses. The first and second telescopes are for example configured as Galilean telescopes and so each of them comprises at least a convergent lens and a divergent lens.

Besides, the user mounts the first magnification extension 51 device onto the first housing 12 to that the first magnification extension device 51 is arranged to form an extension of the first optical path 19 and the user mounts the second magnification extension 52 device onto the first housing 12 to that the second magnification extension device 52 is arranged to form an extension of the second optical path 20.

With the magnification extension devices 51, 52, the entrance of each optical paths 19, 20 - symbolized by dotted lines in figures 2 and 3 - is the associated ocular 16, 18 and the exit of each optical paths 19, 20 is the associated magnification extension device 51, 52 (when the first optical equipment 11 is combined with the third optical equipment 50).

For example, the magnification extension devices 51, 52 are affixed onto the first optical equipment 11 as the one of the second optical equipment 34. For example, the magnification extension devices 51, 52 are screwed onto the first housing 12 like the one of the second optical equipment 34.

Besides, the reticle 22 comprises also at least a third scale 53 dedicated to be used solely with the first optical equipment 11 when the third optical equipment 50 is attached to the first optical equipment 11.

The third scale 53 could carry at least one horizontal and/or at least one vertical line. At least one of the lines could comprise at least two marks (dashes and/or dots).

In the present case, the third scale 53 comprises a horizontal line and a vertical line extending from the middle of the horizontal line and heading exclusively toward the bottom. Each line comprises regular marks. The third scale 53 is defined based on at least one optical characteristic of the third optical equipment 50 as for example its magnification.

The third scale 53 is an angular scale. The third scale 53 could then be used for angular difference measurements while observing a specific object.

As already stated, the third scale 53 (as part of the reticle 22) is carried by the optic element 21 as the two other scales 41, 42. Thus, the third scale 53 is arranged in a different zone of the optic element 21 that the zones carrying the two first scales 41, 42.

For example, third scale 53 is arranged in the upper part of the optic element 21.

For example, the third scale 53 is arranged at one side of the optic element 21. For example, the third scale 53 is arranged between the first scale 41 and the second scale 42. For example, the third scale 53 is arranged at the left side of the optic element 21.

Thus, when the user perceives a scene through the system 1, he could see the reticle 22 and in particular:
- the crosshair pattern 23a and the middle pointer 23b,
- in the lower part of the reticle 22, the first scale 41 at his left and the second scale 42 at his right,
- in the upper part of the reticle 22, the third scale 53 at his left.

Preferably, a caption 54 is also associated to the third scale 53. For example, the caption 54 indicates the at least one optical characteristic that defined the third scale 53. For example, the caption 54 indicated the magnification associated with the third scale 53 (i.e. the magnification of the system 1 with the third optical equipment 50).

The caption 54 is preferably arranged in the vicinity of the third scale 53. For example, the caption 54 is arranged under the horizontal line of the third scale 53. For example, the caption 54 is arranged at one side of the vertical line of the third scale 53.

Preferably, the means for detecting if the second optical equipment 34 is mounted onto the first optical equipment 11 are also configured to detect if the third optical equipment 50 is mounted onto the first optical equipment 11.

The means for detecting the presence and/or the absence of the second optical equipment 34 and for detecting the presence and/or the absence of the third optical equipment 50 could comprise for example one or several sensors. For example, the system 1 comprises a first sensor 46 to monitor if a first magnification extension device is mounted or not and a second sensor 47 to monitor if a second magnification extension device is mounted or not. To provide the information which magnification extension device is actual mounted, each magnification extension device of the second optical equipment 34 could carry a first type identifier and each magnification extension device of the third optical equipment 50 could carry a second type identifier. In this way, the system 1 could determine, if a magnification extension device is attached and could determine the type of said attached magnification extension devices.

The sensors could be for example based on RFID technology, which use RFID tags as type identifiers. In another exemplary embodiment, the sensors could be for example configured to detect colors, the sensors using colors marks as type identifiers. In another exemplary embodiment, the sensors could be for example configured to measure conductivity, the sensors using different conductivity patterns as type identifiers.

In another exemplary embodiment, the sensors 46, 47 could be for example configured as master in an electronic master-slave communication system. The type identifier on the attached magnification extension device is supplied with electric power from the first optical equipment 11 and acts as slave in the master-slave communication system, reporting the actual type of the attached magnification extension device on request.

Obviously, the same is possible using a communication bus with the first optical equipment 11 as bus master.

Examples for mentioned communications are I2C, 1-wire and SPI.

Note that the description of two apparently different type identifiers is just exemplary. The same type identifier function can be performed by a single non-volatile programmable hardware with two different programs. Preferably, the system 1 also includes means for actively indicating which scale to use depending on if the second optical equipment 34 or the third optical equipment 50 is mounted or not on the first optical equipment 11.

For example, said means generate an indication 48 to be actively displayed onto at least one of the optical paths of the system 1. For example, said means use the electronic display 33 to display the active indication 48.

In this way, said indication 48 shown on the electronic display 33 is also visible by at least one eye of the user (ocular 16) when looking through the oculars 16, 18.

The indication 48 could be an arrow, a light point, a circle or any other symbol, figure, alphanumeric character, etc. that permits to highlight which scales to use. For example, the indication 48 could, highlight the caption and/or the scale.directly.

For example, the indication 48 is an arrow that is directed to the caption of the scale to be used.

With this third embodiment, there are then three possible configurations having three different magnifications: the first configuration is the system 1 without any magnification extension device, the second configuration is the system 1 with attached second optical equipment 34, the third configuration is the system with attached third optical equipment 50.

Thus, the reticle 22 includes three scales 41, 42, 53 for the three configurations (depicted here having exemplary magnifications 12x, 17x and 25x).

When the first configuration is detected by the sensors, the electronic display 33 generates an arrow, which marks the first scale 41, which is appropriate for the user angle difference measurements in this configuration. There are no active indications for the second and third scales. When the second configuration is detected by the sensors, the electronic display 33 generates an arrow, which marks the second scale 42, which is appropriate for the user angle difference measurements in this configuration. There are no active indications for the first and third scales. When the third configuration is detected by the sensor, the electronic display 33 generates an arrow, which marks the third- scale 53, which is appropriate for the user angle difference measurements in this configuration. There are no active indications for the first and second scales.

In figure 8, a spotting binocular system 1 is presented according to a fourth embodiment of the invention.

This system 1 is identical to the one of the third embodiment except that it is configured to detect an error of configuration and to notify it to the user.

For example, if only one magnification extension device is attached to the system 1 or if a magnification extension device of the second optical equipment 34 and a magnification extension device of the third optical equipment 50 are mounted at the same time onto the first optical equipment 11, the system 1 could diagnose the wrong configuration according to the information generated by the sensors.

The system 1 could inform the user of the problem by at least one audible and/or visible signal.

For example, the system 1 could use the electronic display 33 to display a visible signal 55.

In this way, said visible signal 55 shown on the electronic display 33 is also visible by (at least) one eye of the user, whenlooking through the oculars 16, 18, so that the user could correct the wrong configuration.

The visible signal 55 could be a message, a word, a symbol, a figure, etc. The visible signal 55 could be for example the word "error". The visible signal 55 could be display next to other elements visible by the user (scale, caption ...) or could overlay in part or totally one or several of said elements.

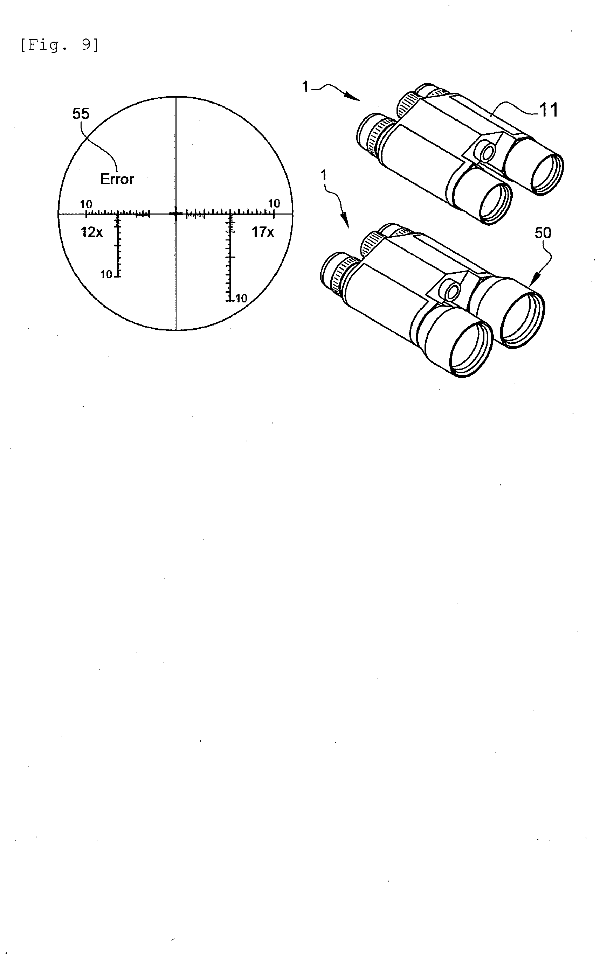

In figure 9, a spotting binocular system 1 is presented according to a fifth embodiment of the invention.

This system 1 is identical to the one of second embodiment except that it configured to detect an error of configuration and to notify it to the user.

For example:
- if only one magnification extension device is attached to the system 1,
- if magnification extension device of an optical equipment that is not supposed to be mounted onto the first optical equipment 11 is in fact mounted onto the first optical equipment 11,
the system 1 could diagnose the wrong configuration according to the information generated by the sensors.

The system 1 could inform the user of the problem by at least one audible and/or visible signal.

For example, the system 1 could use the electronic display 33 to display the visible signal 55.

In this way, said visible signal 55 shown on the electronic display 33 is also visible by at least one eye of the user (at least ocular 16), when looking through the oculars 16, 18, so that the user could correct the wrong configuration. The visible signal 55 could be a message, a word, a symbol, a figure, etc. The visible signal 55 could be for example the word "error". The visible signal 55 could be display next to other elements visible by the user (scale, caption ...) or could overlay in part or totally one or several of said elements.

The invention is not limited to the embodiments, which have just been described, but on the contrary, includes any variant having, with equivalent means, the main features stated above.

For example, even if the described spotting binocular system comprises an LRF, the spotting binocular system in a variant.could not comprise an LRF.

Even if the telescopes of the described magnification extension devices are Galilean telescopes, at least one of the telescopes could have another configuration. Alternative embodiments thus include other telescope designs (Kepler telescopes, catadioptric telescopes, cemented lens groups ...) or afocal magnification extension devices with magnification less than one or magnification extension devices with varying entrance pupil diameters or smaller entrance pupil diameters but less weight.

Even if in this description the magnification extension devices are screwed to the first housing, it is just an exemplary embodiment. Alternative embodiments to temporally affixed the second and/or third optical equipment onto the first optical equipment could be bayonet mounts, breech-lock lens mounts, friction mounts, etc. Although the crosshair pattern is cross-shape, the crosshair pattern could be more complex: many variations of additional features are possible including dots, posts, concentric circles/horseshoes, chevrons, graduated markings, or a combination of above. The reticle could comprise (in addition or in replacement) another pattern than a crosshair pattern like a German reticle.

Although each scale is in a T-shape, at least one scale could be of a different form. At least one scale could be a cross-shape, or could comprise only a horizontal line, or could comprise only a vertical line, etc. At least one scale could extend into at least one diagonal direction. Other alternative embodiments for at least one of the scales could be MIL-Dots scales, MOA scales or scales in other units of angles.

At least two marks are needed on a scale if this scale has to provide angular difference measurement. Alternative embodiments of at least one scale could then be a scale comprising more or less marks (dashed and/or dots) than the illustrated scales.

Positioning of the scales may differ from that illustrated. For example, the first scale could be on the right portion of the reticle and the second scale on the left portion. For example, both scales could be on the right portion (alternatively the left portion) of the reticle, one scale above the other. For example, both scales could be on the upper part of the reticle.

The caption of at least one scale may differ from that described. For example, the caption of at least one scale could be a symbol, a drawing, a word, a sentence ... Said caption would for example specify (by word or by symbol): "with MED" or "without MED".

Although the sensors detecting the presence of the magnification extension device are carried by the first optical equipment, at least one of the sensors could be carried by the second optical equipment (respectively the third optical equipment) or could be carried in part by the first optical equipment and in part by the second optical equipment (respectively the third optical equipment).

Although the indication is an additional element to the scale, the indication of which scale to use could act onto the scale directly for example by overlaying the scale to be used by a scale in a particular color or with ticker lines.

The number of additional optical equipments that could be mounted in turn onto the first optical equipment could differ from those described. For example, more than two additional optical equipments could be mounted in turn onto the first optical equipment. It will be noted that each additional optical equipment has a different magnification than the other additional optical equipment (and of course different from the one of the first optical equipment). For any disclosed embodiment, the second optic equipment and the third optic equipment could have the same local and/or mean magnification and differ in other optic parameter(s) (e.g. optical aberrations, distortion, chromatic aberration). In this case, at least one of the captions and/or one of the scales and/or one of the indications could be defined in view of this optic parameter(s) instead of the magnification.

Of course, the different embodiments can be mixed together. For example, the system could comprise two additional optical equipments as in the third embodiment, without sensors (and indications of which scale has to be used) as in the first embodiment.

The system could not comprise an electronic display 33. The system could comprise one or several LED light points without comprising an electronic display 33.

## Claims

1. A spotting binocular system (1) comprising at least a first optical equipment (11) that comprises at least
a first housing (12),
a first telescope mounted in the first housing comprising at least
an objective (15)
an ocular (16)
a second telescope mounted in the first housing comprising
an objective (17)
an ocular (18)
an optic element (21) carrying at least one reticle (22), the optic element being mounted in the first housing,
the spotting binoculars system being arranged so that a second optical equipment (34) comprising at least a couple of magnification extension devices can be attached in service to the first optical equipment,
the spotting binocular system being **characterized in that** the reticle comprises at least a first scale (41) and a second scale (42), the first scale being dedicated to be used solely with the first optical equipment alone, and the second scale being dedicated to be used with the first optical equipment when the second optical equipment is attached in service to the first optical equipment.

2. A spotting binoculars system according to claim 1, wherein at least one of the scales (41, 42) is an angle scale.

3. A spotting binoculars system according to any one of previous claims, wherein the second optical equipment (34) is part of the spotting binoculars system.

4. A spotting binoculars system according to any of claims 1-3, wherein at least one magnification extension device comprises a second housing and a telescope mounted into said housing.

5. A spotting binoculars system according to claim 4, wherein the second housing and the first housing include means of securing each other.

6. A spotting binoculars system according to any one of claims 1 to 5, comprising also a third optical equipment (50) comprising at least a couple of magnification extension devices, the third optical equipment could be attached to the first optical equipment (11) if, in service, the second optical equipment is not attached to the first optical equipment.

7. A spotting binoculars system according to any one of previous claims, wherein the optic element (21) comprises at least one glass plate and/or at least one glass prism.

8. A spotting binoculars system according to any one of previous claims, being arranged to display onto at least one of the ocular optical paths (19, 20) of the first optical equipment (11) an indication of the scale to be used depending if, in service, the second optical equipment (34) is mounted or not onto the first optical equipment.

9. A spotting binoculars system according to any one of previous claims, being arranged to detect in service an incorrect assembly of the second optical equipment (34) onto the first optical equipment (11) and/or of a third optical equipment (50) onto the first optical equipment in case the system comprises such third optical equipment.

10. A spotting binoculars system according to any one of previous claims, including an integrated laser range finder (24) .
